# EUROPÄISCHE PATENTSCHRIFT

(11) **EP 0 672 592 B1**
(45) Veröffentlichungstag und Bekanntmachung des Hinweises auf die Patenterteilung: **04.09.2002**
(21) Anmeldenummer: 95102484.3
(22) Anmeldetag: 22.02.1995
(51) Int. Cl.: B65D 63/10, B65D 19/44

(54) **Band aus elastisch verformbarer Kunststofffolie, Verfahren zum Sichern von gepackten Waren und Vorrichtung zur Aufnahme und Abgabe dieses Bandes**
Tape made of resiliently deformable plastics, process for securing packaged goods and device for installing or discharging said tape
Bande en matière plastique déformable élastiquement, procédé pour attacher des marchandises emballées et dispositif pour mettre en place et retirer cette bande

(30) Priorität: 25.02.1994 DE 4406163
(43) Veröffentlichungstag der Anmeldung: 20.09.1995
(73) Patentinhaber: Sanstrap Verpackungen GmbH, 21035 Hamburg (DE)
(72) Erfinder: Eichstädt, Hans-Peter, D-21035 Hamburg (DE)
(74) Vertreter: Heldt, Gert, Dr. Dipl.-Ing.

(56) Entgegenhaltungen:
- EP-A- 0 247 952
- US-A- 4 286 429

## Beschreibung

Die Erfindung betrifft ein Band zum Sichern von gepackten Waren, das als eine aus einer elastisch verformbaren Kunststofffolie bestehende ringförmige Schlinge oder Schlaufe ausgebildet ist, die im elastisch verformten Zustand der Kunststofffolie um die Waren herumlegbar ist und die Waren bei nachlassender Zugspannung unverrutschbar beaufschlagt.

Darüber hinaus betrifft die Erfindung ein Verfahren zum Sichern von gepackten Waren mit einer aus einer Kunststofffolie bestehenden ringförmigen Schlinge oder Schlaufe.

Schließlich betrifft die Erfindung eine Vorrichtung zur Aufnahme und Abgabe eines aus Kunststofffolie bestehenden Bandes, mit dem eine gepackte Ware umschlingbar ist und das durch eine Öffnung hindurchziehbar ist.

Bänder, Vorrichtungen und das Verfahren der eingangs genannten Art werden in der Verpackungstechnik vielfach eingesetzt, um zu verhinden, daß eine zu versendende Ware auf dem Transportwege außer Kontrolle gerät, beispielsweise von einer Transportpalette herunterfällt, sich aus einem Verpackungsgebinde löst, oder daß sich eine vorgegebene Verpackungsform verändert, beispielsweise auf eine Rolle aufgewicktelte Folie diese Wickelform verliert.
Zu diesem Zwecke werden im Regelfall Gummibänder verwendet, die um die Ware herumgelegt werden, so daß diese auf dem Transportweg zusammengehalten wird.Diese Gummibänder umfassen in vielen Fällen ausschließlich die Ware, beispielsweise eine Rolle, die gegen Abrollen gesichert werden soll, in anderen Fällen jedoch sowohl die Ware als auch das Transportgebinde, auf dem die Ware gestapelt ist, beispielsweise die Ware und die Palette.

Im Transportgewerbe spielt die Geschwindigkeit des Umschlages eine entscheidende Rolle. Wenn sich beim Stauen der Ware herausstellt, daß eine bestimmte Einzelware den ihr angewiesenen Platz, beispielsweise auf einer Palette verlassen hat, so wird sie beim Umschlag anschließend auf dieser Palette gesichert, beispielsweise mit Hilfe eines Gummibandes, das um die Ware und um die Palette herumgelegt wird. Stellt sich heraus, daß beispielsweise eine aufgerollte Ware ihre Rollenform verloren hat, so wird auch um die Rolle ein Gummiband herumgelegt, um die Rolle daran zu hindern, daß sich die aufgerollte Ware entrollt.

Die dabei verwendeten Gummibänder werden in großen Mengen verwendet und stehen in entsprechender Anzahl beim Verladevorgang zur Verfügung. Andererseits sind diese Gummibänder im Regelfall als verlorenes Verpackungsmaterial anzusehen, da im rauhen Verpackungsgeschäft sich niemand die Mühe macht, die Gummibänder einzusammeln und sie einem neuerlichen Verpackungsvorgang zuzuführen. In vielen Fällen werden Gummibänder zerschnitten, so daß sie ohnehin für weitere Verpackungsvorgänge nicht verwendet werden können.

Derartige Gummibänder sind teuer und stehen in vielen Fällen in der benötigten Menge nicht zur Verfügung. Darüber hinaus können die Gummibänder nur als Ringe eingesetzt werden. Diese Ringe werden am Bestimmungsort der Ware im Regelfall zerschnitten und können daher nicht wiederbenutzt werden. Außerdem müssen je nach der zu verpackenden Ware Ringe verschiedener Größen zur Verfügung stehen, so daß eine umfangreiche Lagerhaltung nicht zu vermeiden ist.

Darüber hinaus waren für Verpackungszwecke am Anmeldetag bereits Trageschlingen bekannt, die aus der U.S. Patentschrift 4,269,308-Platt bekannt geworden sind. Derartige Trageschlingen bestehen aus einem endlosen Band, das eine einem umschlossenen Innenraum zugekehrte Innenkante und eine dieser gegenüberliegende Außenkante aufweist. An der Innenkante ist ein Griff befestigt, der eine Grifföffnung umschließt.

Eine derartige Trageschlinge wird verwendet, um einen 12er-Pack von zylindrischen Getränkedosen zu umschließen, die an einer ihrer beiden Grundflächen über eine Verbindungsfolie miteinander verbunden sind. Mit Hilfe der Trageschlinge sollen diese Getränkedosen einerseits im 12er-Pack zusammen gehalten werden, wobei die Ausrichtung der einzelnen Dose im 12er-Pack mit Hilfe der Verbindungsfolie erreicht wird. Andererseits soll die Trageschlinge vermittels des mit ihr verbundenen Griffes das Tragen des 12er-Packs erleichtern.

Die Trageschlinge wird aus einer sich in einer Ebene erstreckenden Folie, beispielsweise einer sich in horizontaler Ebene erstreckenden Folie ausgestanzt. Zum Umschlingen der zylinderförmigen Behälter wird zunächst das endlose Band aus der Horizontalen in eine vertikale Ebene verformt. Zu diesem Zwecke wird die Innenkante in einem höheren Maße gedehnt als die Außenkante. Sodann wird die in dieser Weise verformte Folie über den 12er-Pack gezogen, indem sie so weit vorgedehnt wird, daß sie über dem 12er-Pack gestreift werden kann. Nach dem Umlegen des endlosen Bandes um den 12er-Pack steht der Griff parallel zu den äußere Oberflächen der Behälter in deren Ebene. Er kann jedoch aus dieser Ebene herausgekippt werden, damit er zum Tragen des 12er-Packs erfaßt werden kann.

Dabei soll die Befestigung des Griffes an der Innenkante den Vorteil besitzen, daß damit die über den Griff in das endlose Band eingeleitete Tragekraft über die stark gedehnte Innenkante in die Trageschlinge eingeleitet wird. Auf diese Weise soll verhindert werden, daß die Schinge beim Ergreifen des 12er-Packs zerreißt.

Darüber hinaus ist aus der europäischen Patentanmeldungsschrift 0 247 952-Gennesson ein elastisches Band zum Umschlingen von Waren bekannt geworden. Dieses elastische Band wird aus einer mehrfach geteilten flachen Folie hergestellt, die einen Selbstklebeeffekt besitzt. Nach der Herstellung der einzelnen Bänder können diese zum Sichern von Ware um diese herumgeschlungen werden. Anschließend müssen jedoch diese Bänder verknotet oder deren Enden auf andere Weise miteinander verbunden werden.

Darüber hinaus ist aus der US-Patentschrift 4,286,429 ein ringförmiges Band aus Polypropylen bekannt geworden, das aus einer Vielzahl kleiner Schlaufen, die ineinander greifen, besteht. Wenngleich dieses ringförmige Band auch Verpackungszwecken dienen soll, so ist es nicht geeignet, im elastisch verformten Zustand um Ware herumgelegt zu werden. Von einer Elastizität ist im Zusammenhang mit diesen Schlaufenbändern nicht die Rede.

Aufgabe der vorliegenden Erfindung ist es daher, das elastische Band der eingangs genannten Art so zu verbessern, daß Kosten erheblich abgesenkt werden können, und zwar sowohl im Hinblick auf die Kosten für das Einzelband als auch für die gesamte Lagerhaltung.

Diese Aufgabe wird erfindungsgemäß dadurch gelöst, daß die ungedehnte Kunststofffolie eine Stärke zwischen 0,01 und 0,1 mm, vorzugsweise zwischen 0,01 und 0,05 mm aufweist und Elastizität in einem Bereich bis zu 600 % ihrer ungedehnten Ausgangslänge behält.

Ein derartiges Band behält seine Elastizität in einem weiten Bereich seiner Dehnbarkeit. Ein weit vorgedehntes Band kann einen relativ großen Gegenstand umspannen, ein weniger weit vorgedehntes Band einen entsprechend kleinen Gegenstand. Die Ausgangslänge des Bandes wird dadurch nicht beeinflußt. Diese ist sowohl zum Umspannen kleiner als auch großer Gegenstände geeignet.

Darüber hinaus braucht ein derartiges Band nicht in Form von Ringen gelagert werden. Obgleich eine Vorratshaltung in Form von Ringen den Vorteil besitzt, daß das Band unmittelbar einsetzbar ist und eine Verbindung seiner Enden am Ort des Einsatzes sich erübrigt. Insbesondere bei Ware, deren Größe in weiten Grenzen variabel ist und bei der die Größenunterschiede sehr häufig auftreten, kann eine ringförmige Gestaltung des Bandes erst am Ort des Einsatzes vorgenommen werden. Zu diesem Zwecke werden zwei sich einander gegenüberliegende Enden eines in gerader Richtung verlaufendesn Bandes am Ort des Einsatzes, beispielsweise nach Umwickeln einer Ware miteinander verbunden. Dabei kann während des Verbindungsvorganges die jeweils gewünschte Vordehnung auf das Band aufgebracht werden.

Zweckmäßigerweise wird die Folie zu einem schnur- oder bandartigen elastisch dehnbaren Straps geformt, der im wesentlichen in Längsrichtung der Folie verlaufende Verformungen aufweist. Bei einem solchen Straps tragen die in Längsrichtung der Folie verlaufenden Verformungen dazu bei, daß er eine relativ hohe Festigkeit gegen Einreißen besitzt. Im Bereich der Verformungen entstehen Falten, die entsprechend der Anzahl der aufeinanderliegenden Folienschichten eine vergleichweise hohe Festigkeit gegen Einreißen besitzen, beispielsweise wenn der Straps um scharfe Kanten oder Ecken geleitet werden muß.

Gemäß einer weiteren bevorzugten Ausführungsform der Erfindung spannt sich der gedehnte, um den Gegenstand und/oder die Transporteinheit herumgelegte Straps durch eine in Folge seiner elastischen Dehnung bewirkte Rückstellkraft straff um die Ware und/oder Verpackungsbehälter herum. Dadurch ist dafür gesorgt, daß der Gegenstand seine Verpackungsform beibehält und gegebenenfalls in seiner Lage auf dem Verpackungsbehälter verbleibt, auch wenn beim Transport der Gegenstand und seine Transporteinheit stark erschüttert werden. Weder verrutscht der Gegenstand bezüglich der Transporteinheit, noch verliert er seine Aufmachung. So wird beispielsweise aufgerollte Ware daran gehindert, sich aus einer Rolle abzurollen.

Die Verformungen können jedoch auch als Windungen ausgebildet sein, in denen Teilbereiche der Folie miteinander verbunden sind. Eine solche Zurichtung der Folie hat darüber hinaus den Vorteil, daß beim Aufbringen der Verwindungen die Ware gedehnt werden kann, so daß sie ihre jeweils gewünschte Elastizität erhält.

Die Folie kann auch quer zur Längsrichtung des Stranges gerafft sein. Eine solche Raffung wird sich im Regelfall als einfachste Art der Verformung darstellen, indem eine ebene Folie lediglich mit den Händen an ihren jeweiligen Enden erfaßt und im gewünschten Maße vorgedehnt wird. Dabei stellt sich eine Raffung der Folie im Regelfall ohne weiteres Zutun von selbst ein.

Es ist jedoch auch möglich, die Verformungen in Form von einer Verdrillung aufzubringen. Auch dadurch wird die Folie sehr widerstandsfähig gegen Einreißen.

Gemäß einer weiteren bevorzugten Ausführungsform der Erfindung weist der ungedehnte verformte Strang ein großes luftgefülltes Hohlraumvolumen auf, so daß sein spezifisches Gewicht kleiner als 0,5 g/cm³, vorzugsweise kleiner als 0,3 g/cm³ ist. Ein solcher Strang behält seine Elastizität und besitzt trotzdem eine gute Widerstandskraft gegen mechanische Beschädigungen, beispielsweise gegen Einreißen und örtliche Überdehnungen.

Durch das Raffen, Rollen und/oder Verdrehen des Folienstreifens wird aus dem breiten, flächenhaften Folienstreifen mit geringer Stärke ein schmaler und im Verhältnis zur Stärke des Folienstreifens verhältnismäßig dicker vorzugsweise schnur- oder bandartiger Straps gebildet, der in seiner Längsrichtung noch genauso elastisch dehnbar wie der flächenhafte Folienstreifen ist, sich jedoch zum Anbringen von Hand sehr viel leichter handhaben läßt. Nach dem Anbringen spannt sich der geraffte, gerollte und/oder verdrehte Folienstreifen (Straps) unter Zugspannung straff um die Waren und/ oder Verpackungsbehälter herum, so daß er nicht von selbst verrutschen kann und damit die Waren und/oder Verpackungsbehälter sicher zusammenhält.

Zwar ist bereits eine Paketschnur bekannt, die aus einem zu einer Schnur verdrillten Folienstreifen besteht. Die bekannte Paketschnur ist jedoch nicht elastisch dehnbar und weist keine Stretcheigenschaften auf, was vermutlich dadurch begründet ist, daß der zur Herstellung dieser Schnur verwendete Folienstreifen keine elastischen Eigenschaften aufweist oder bereits soweit vorgedehnt ist, daß er eine ggf. vorhandenen Elastizität verloren hat.

Insbesondere in vielen Herstellerbetrieben werden darüber hinaus Verfahren und Vorrichtungen eingesetzt, mit denen beladene Paletten umwickelt werden, um so zu verhindern, daß sich die neben- und übereinander auf die Transportpaletten gestapelten Waren und/oder Verpackungsbehälter, wie Kartons, Kisten, Fässer oder dergleichen während des Transports zu einem Kunden aus dem Verband lösen und von der Transportpalette herunterfallen. Der bahnförmig auf eine Vorratsrolle aufgewickelte Folienstreifen wird dabei mitteils einer beispielsweise aus der US-A-4,503,658 bekannten Vorrichtung unter gleichzeitiger Dehnung in mehreren überlappenden oder übereinanderliegenden Lagen um die auf einem Drehteller angeordneten Waren und/oder Verpackungsbehälter herumgewickelt, wobei sich die Folienbahn nach dem Herumlegen aufgrund eines Stretcheffektes um die Waren und/oder Verpackungsbehälter spannt, der durch die elastische Rückstellkraft der gedehnten Folie verursacht wird. Bei anderen bekannten Vorrichtungen ist ein die Vorratsrolle tragender Wagen unter Abwickeln des Folienstreifens um die Transportpalette und die darauf angeordneten Waren und/oder Verpakkung herum verfahrbar. Diese Verpackungstechnik wird aber mit möglichst großflächigen Folienbahnen vorgenommen, die mehrfach, meistens jedoch zweifach um die Palette und die darauf gestapelte Ware gewickelt wird. Eine Verformung der Folie findet erst statt, wenn diese um die Ware und die Palette herumgewickelt wird. Diese Verformung findet jedoch nicht in Längsrichtung der Folie mit dem Ziel, einen Straps zu erzeugen, statt, sondern hat lediglich den Sinn, die Palette und die Ware stramm zu umwickeln, um aus der Palette und der Ware eine Transporteinheit herzustellen. Demgegenüber werden die erfindungsgemäß hergestellten Strapse dazu benutzt, die Einzelware transportsicher zu gestalten, beispielsweise gegen ein Öffnen und Entrollen zu sichern. Für diese Zwecke kann die bereits vorbekannte Wickeltechnik nicht eingesetzt werden.

Diese geht vielmehr davon aus, daß nur einzelne Strapse beispielsweise statt der bereits vorbekannten Gummibänder eingesetzt werden. Diese Strapse zeichnen sich durch die bereits erwähnte in Längsrichtung der Strapse vorgenommene Verformung aus. Dabei ist unter einem "Raffen" des Folienstreifens ein Übereinanderlegen mehrerer zueinander im wesentlichen paralleler Teilbereiche desselben quer zur Längsrichtung zu verstehen, wobei man einen durch Raffen erzeugten Straps im einfachsten Fall dadurch herstellen kann, daß man seine Längsseitenkanten aufeinanderzu bewegt und dabei die Höhe der entstehenden Falten begrenzt. Alternativ dazu kann ein geraffter Straps beispielsweise auch durch Übereinanderfalten vorzugsweise gleichbreiter paralleler Teilstücke des flächenhaften Folienstreifens quer zu dessen Längsrichtung erzeugt werden.

Ein gerollter Folienstreifen entsteht demgegenüber dadurch, daß man den Folienstreifen quer zu seiner Längsrichtung zusammenrollt, ggf. nachdem er zuvor ein oder mehrere Male in derselben Richtung zusammengefaltet worden ist, um das Zusammenrollen zu erleichtern. Der dadurch gebildete Straps weist in Längsrichtung verlaufende Längsseitenkanten und quer dazu einen spiraligen Querschnitt auf.

Ein Verdrehen des Folienstreifens um seine Längsachse beinhaltet in der Regel eine Drehbewegung seiner Stirnenden mit entgegengesetztem Drehsinn um die Längsachse, kann aber auch dadurch erreicht werden, daß der Folienstreifen an einer Stelle eingespannt, das überstehende freie Ende in einer Richtung um die Drehachse gedreht und der Folienstreifen dann an der Einspannstelle abgetrennt wird. Das Ergebnis des Verdrehens ist ein seilartiger verdrillter Straps, dessen Längsseitenkanten spiralförmig um die Längsachse verlaufen.

Eine bevorzugte Ausgestaltung der Erfindung sieht vor, daß der Folienstreifen aus Kunststoff besteht, vorzugsweise aus einem der Kunststoffe, die bereits zum Umwickeln von Waren und/oder Verpakkungsbehältern mit bahnförmigen Folienstreifen eingesetzt werden. Folien aus diesen Kunststoffen sind aufgrund einer zickzackförmigen Ausrichtung der Molekülketten in Längsrichtung des Folienstreifens bis zur Erschöpfung ihrer Dehnfähigkeit unter Zug begrenzt elastisch dehnbar und ziehen sich nach Beendigung der Zugkrafteinwirkung wieder um ein bestimmtes Maß zusammen, so daß sie in einem gewissen Dehnungsbereich Eigenschaften aufweisen, die denen gummielastischer Materialien nahekommen. Vorzugsweise sind die Materialeigenschaften, insbesondere die Verformbarkeit und die Abmessungen des Folienstreifens quer zu seiner Längsrichtung so aneinander angepaßt, daß der geraffte, gerollte und/oder verdrehte Folienstreifen, von Hand ohne sehr großen Kraftaufwand gedehnt werden kann, vorzugsweise jedoch nicht wesentlich über ihre Dehnfähigkeit hinaus.

Um dies einerseits zu erreichen, andererseits jedoch ein Einreißen oder Durchreißen des Folienstreifens während der elastischen Dehnung zu verhindern, sieht eine weitere bevorzugte Ausgestaltung der Erfindung vor, daß die Dehnfähigkeit des als Ausgangsmaterial verwendeten flächenhaften Folienstreifens zwischen 300% und 700% liegt, und daß der Folienstreifen eine Reißfestigkeit aufweist, die im Bereich zwischen 25 und 40 N/mm² liegt, vorzugsweise mehr als 35 N/mm² beträgt, bezogen auf die Breite des Folienstreifens.

Eine vorteilhafte Ausgestaltung der Erfindung sieht vor, daß marktübliche Folien aus PVC, Polyethylen, insbesondere LLDPE, Polypropylen, Polyester, Polaycarbonat oder dgl. mit einer Stärke von weniger als 0,1 mm, vorzugsweise weniger als 0,05 mm verwendet werden, wobei die Breite des Folienstreifens vor dem Raffen, Zusammenrollen und/oder Verdrehen je nach Materialeigenschaften zwischen 0,05 m und 0,5 m, in besonderen Fällen aber auch noch darüber oder darunter liegen kann. Vorzugsweise werden Breiten zwischen 100 und 200 mm gewählt, so daß man bei Folienstärken zwischen 0,015 und 0,05 mm die gewünschten Festigkeitseigenschaften erhält. Die verwendeten gerafften, gerollten und/oder verdrehten Folienstreifen sind wie die bereits zum Umwickeln von Waren und/oder Verpackungsbehältern verwendeten glatten Folienbahnen je nach Dicke und Materialwahl bis zu 600 % dehnbar, wobei ein Straps entsteht, der je nach Breite des Folienstreifens die Dicke eines Bindfadens oder einer Schnur aufweist. Die Elastizität des Strapses entspricht nicht genau derjenigen von gummielastischen Materialien wie Kautschuk oder dergleichen, insbesondere beinhaltet eine größere Dehnung auch eine unelastische Verformung, d.h. der Straps kehrt nach der Dehnung nicht in seine Ausgangslage zurück, sondern ist etwas länger als in ungedehntem Zustand. Für das beschriebene Anwendungsgebiet ist dies jedoch unbedeutend, da der Straps nach dem Anbringen eine nicht unbeträchtliche Dehnung aufweisen und außerdem nicht wiederverwendet werden soll. Wesentlich ist nur, daß die zum Anbringen, d.h. zum Überstreifen eines zu einer Schlinge oder Schlaufe geformten Strapses mit einer gegenüber den Umfangsabmessungen der Waren und/oder Verpackungsbehälter kleineren Länge oder zum Verbinden der Stirnenden eines langgestreckten Strapses erforderliche Längendehnung durch die elastische Rückverformung nach dem Loslassen des Strapses kompensiert wird, was im Fall der erfindungsgemäßen Folienstreifen gegeben ist.

Die jeweils zum Umwickeln bestimmter Waren- oder Verpackungsbehälterstapel oder zum Herumlegen um genormte Transportpaletten vorgesehenen Strapse können vorgefertigt sein und vom Benutzer in bestimmten Längen bezogen werden. Alternativ dazu ist vorgesehen, daß der Benutzer die Strapse vor Ort in gewünschter Länge von einem endlosen, auf eine Vorratsrolle aufgewickelten oder in Schleifen übereinanderliegend in einem Behälter gelagerten Folienstreifen abtrennt, der bereits beim Hersteller gerafft und/oder verdreht worden ist.

Gemäß einer anderen vorteilhaften Ausgestaltung der Erfindung kann der Folienstreifen vor dem Abtrennen Teil einer auf eine Vorratsrolle aufgewickelten bahnförmigen Folie sein, deren Breite zweckmäßig derjenigen des Folienstreifens entspricht und die in vorbestimmten, der Länge der benötigten Folienstreifen entsprechenden Abständen mit Perforationen oder dergleichen versehen sein kann, um ein Abtrennen der Folienstreifen ohne Hilfsmittel zu ermöglichen. Das Raffen, Zusammenrollen und/oder Verdrehen des Folienstreifens kann hier im einfachsten Fall ohne weitere Hilfsmittel von Hand kurz vor oder nach dem Abtrennen des Folienstreifens erfolgen, wobei ein Zusammenrollen des Folienstreifens allerdings erst nach dem Abtrennen möglich ist. Alternativ dazu kann ein Raffen, Rollen und/oder Verdrehen des bahnförmigen Folienstreifens auch mit Hilfe einfacher Vorrichtungen erfolgen, beispielsweise dadurch, daß derselbe hinter der Vorratsrolle unter Raffen durch einen engen Spalt gezogen und/oder durch eine Vorrichtung hindurchgeführt wird, die derjenigen ähnlich ist, die zum Verdrillen von Bandstacheldraht verwendet wird.

Bei Verwendung langgestreckter Folienstreifen können deren entgegengesetzte Stirnenden vor oder nach dem Herumlegen um die Ware miteinander verbunden werden, im zuerst genannten Fall vorzugsweise durch Verschweißen oder Verkleben und im zuletzt genannten Fall vorzugsweise durch Verknoten. Das Dehnen des Folienstreifens erfolgt zweckmäßig beim Herumlegen um die Waren und/oder Verpakkungsbehälter und zwar im zuerst genannten Fall vorzugsweise beim Überstreifen der durch Verbinden der Stirnenden gebildeten endlosen Schlaufe oder Schlinge über die Waren und/oder Verpackungsbehälter, und im zuletzt genannten Fall vorzugsweise beim Zusammenziehen des Knotens. Nach dem Überstreifen bzw. nach dem Zuziehen des Knotens zieht sich der gedehnte Folienstreifen infolge der elastischen Rückstellkräfte unter Verkürzung zusammen und legt sich in der vorgesehenen Lage straff von außen her gegen die Waren und/oder Verpackungsbehälter an, so daß diese sicher zusammengehalten werden.

An Stelle von langgestreckten Folienstreifen, deren entgegengesetzte Stirnenden vor oder beim Herumlegen um die Waren und/oder Verpackungsbehälter miteinander verbunden werden, können gemäß einer weiteren vorteilhaften Ausgestaltung der Erfindung auch Folienstreifen verwendet werden, die bereits herstellungsbedingt eine ringförmig geschlossene Form aufweisen. Derartige Folienstreifen können beispielsweise durch Abtrennen kurzer Abschnitte von einer extrudierten Schlauchfolie erzeugt werden, wobei ein Raffen oder Zusammenrollen in Längsrichtung der Schlauchfolie vor oder nach dem Abtrennen sowohl beim Hersteller als auch beim Verbraucher erfolgen kann. Alternativ dazu können beispielsweise auch zwei Folienbahnen übereinandergelegt, in vorgegebenen Abständen vorzugsweise jeweils mittels zweier hintereinander quer zur Längsrichtung angeordneter Schweißnähte miteinander verschweißt und zwischen den Schweißnähten mit Perforationen versehen werden, die ein Abtrennen der Folienstreifen erleichtern, die nach dem Verschweißen entweder bahnförmig oder in gerafftem, gerolltem und/oder verdrehtem Zustand auf eine Vorratsrolle aufgewickelt werden.

Eine Anpassung der Länge eines etwas zu langen, zu einer Schlinge oder Schlaufe geformten Strapses an die Umfangsabmessungen der Waren und/oder Verpackungsbehälter ist dadurch möglich, daß man den Straps durch Abbinden mittels eines Knotens verkürzt, wobei gleichzeitig mit dem Herstellen des Knotens eine Dehnung des Folienstreifens erfolgen kann.

Sehr lange Strapse kann man zwei oder mehrere Male um die Waren und/oder Verpackungsbehälter herumlegen, indem man sie entweder doppelt oder mehrfach zusammenlegt und dann wie oben bereits beschrieben die freien Stirnenden miteinander verbindet. Sehr lange zu einer Schlinge oder Schlaufe geformte Strapse lassen sich auch dadurch anbringen, daß man die Schlinge oder Schlaufe über die Waren und/oder Verpackungsbehälter streift, den nach dem Überstreifen überstehenden Teil verschränkt, d.h. zwei Teilbereiche desselben kreuzweise übereinanderlegt und die entstehende kleinere Schlinge oder Schlaufe erneut über die Waren und/oder Verpackungsbehälter streift, wobei dieser Vorgang zweckmäßig solange fortgesetzt wird, bis sich die verbleibende Schlinge oder Schlaufe nicht mehr überstreifen läßt. Diese kann daraufhin wie oben beschrieben unter gleichzeitigem Dehnen des mehrfach um die Waren herumgeschlungenen Strapses mittels eines Knotens abgebunden oder an der entspechenden Stelle durch Verschweißen der aufeinandertreffenden Teilbereiche verkürzt werden.

Bei mehrmaligem Umschlingen der Waren und/oder Verpackungsbehälter mit einem durchgehenden Folienstreifen sind einzelne, um die waren und/oder Verpackungsbehälter herum verlaufende Windungen des Folienstreifens in der Regel im wesentlichen parallel zueinander angeordnet. Alternativ dazu kann man die Waren und/oder Verpackungsbehälter aber auch derart mit dem Folienstreifen umschlingen, daß einzelne Windungen desselben jeweils in zwei oder auch drei zueinander senkrechten Ebenen liegen, wobei sich diese Windungen dann jeweils auf gegenüberliegenden Seiten des Waren- und/oder Verpackungsbehälterstapels überkreuzen. Bei Verwendung langgestreckter Folienstreifen ist es in diesem Fall vorteilhaft, die sich überkreuzenden Teilbereiche an den Kreuzungsstellen durch Herumschlingen eines Teilbereichs um den anderen in ihrer Lage zu fixieren.

Die im Vorangehenden beschriebenen gerafften, gerollten und/ oder verdrehten Folienstreifen (Strapse) lassen sich nicht nur zum Sichern von Waren und/oder Verpackungsbehältern einsetzen, sondern können erfindungsgemäß auch an Stelle von Bindfaden oder Schnur zum Verschnüren von Paketen oder zum Zusammenschnüren von Rollenware wie Teppichen oder dgl. verwendet werden. Ein weiteres Einsatzgebiet findet sich beispielsweise beim Festlegen von Schranktüren während des Versandes von Schränken.

Gemäß einer weiteren bevorzugten Ausführungsform der Erfindung ist eine Vorrichtung zur Aufnahme eines Bandes zum Sichern einer mindestens einen zu transportierenden Gegenstand umfassenden Transporteinheit als ein das Band aufnehmender Behälter ausgebildet, der in Ausziehrichtung des Bandes eine das Band mit Verformungen versehene Öffnung aufweist, die mit einer das Ausziehen des Bandes erschwerenden Hemmung versehen ist, zu deren Überwindung eine notwendige Dehnung und Verformung des Bandes erforderliche Kraft auf das Band aufzubringen ist. In dieser Öffnung wird das Band mit den in seiner Längsrichtung verlaufenden Verformungen versehen, wenn das Band durch dieses Loch hindurchgezogen wird. Dabei kann in dem Loch eine Hemmung vorgesehen sein, zu deren Überwindung eine die notwendige Dehnung und Verformung des Bandes erforderliche Kraft auf das Band aufzubringen ist. Auf diese Weise erhält dieses die für den gewünschten Einsatz erforderliche Dehnung. Darüber hinaus kann diese Hemmung auch so ausgebildet sein, daß die in Längsrichtung verlaufenden Verformungen beim Durchziehen des Bandes durch das Loch entstehen. Insbesondere kann auch das Band im Bereich der Hemmung verdrillt werden.

Weitere Einzelheiten der Erfindung ergeben sich aus der nachfolgenden ausführlichen Beschreibung und den beigefügten. Zeichnungen, mit denen bevorzugte Ausführungsformen der Erfindung beispielsweise veranschaulicht sind. In den Zeichnungen zeigen:
- Fig. 1:: einen vergrößerten Querschnitt durch einen quer zu seiner Längsrichtung gerafften Folienstreifen;
- Fig. 2:: einen vergrößerten Querschnitt durch einen quer zu seiner Längsrichtung zu einer Spirale zusammengerollten Folienstreifen;
- Fig. 3:: eine Seitenansicht eines Abschnitts eines gerafften und verdrehten Folienstreifens;
- Fig. 4:: einen Ausschnitt aus einem räumlich dargestellten und geschnittenen Folienstreifen einer Doppelfolie;
- Fig. 5:: einen Ausschnitt einer gefalteten Folienbahn, deren Längskanten miteinander verbunden sind;
- Fig. 6:: eine schematische Darstellung eines mit einem gerafften Folienstreifen gesicherten Schrankes;
- Fig. 7:: eine schematische Darstellung einer mit Hilfe eines Folienstreifens auf einer Palette gesicherten Ware;
- Fig. 8:: eine schematische Darstellung in Seitenansicht einer Vorrichtung zum Raffen einer Folie;

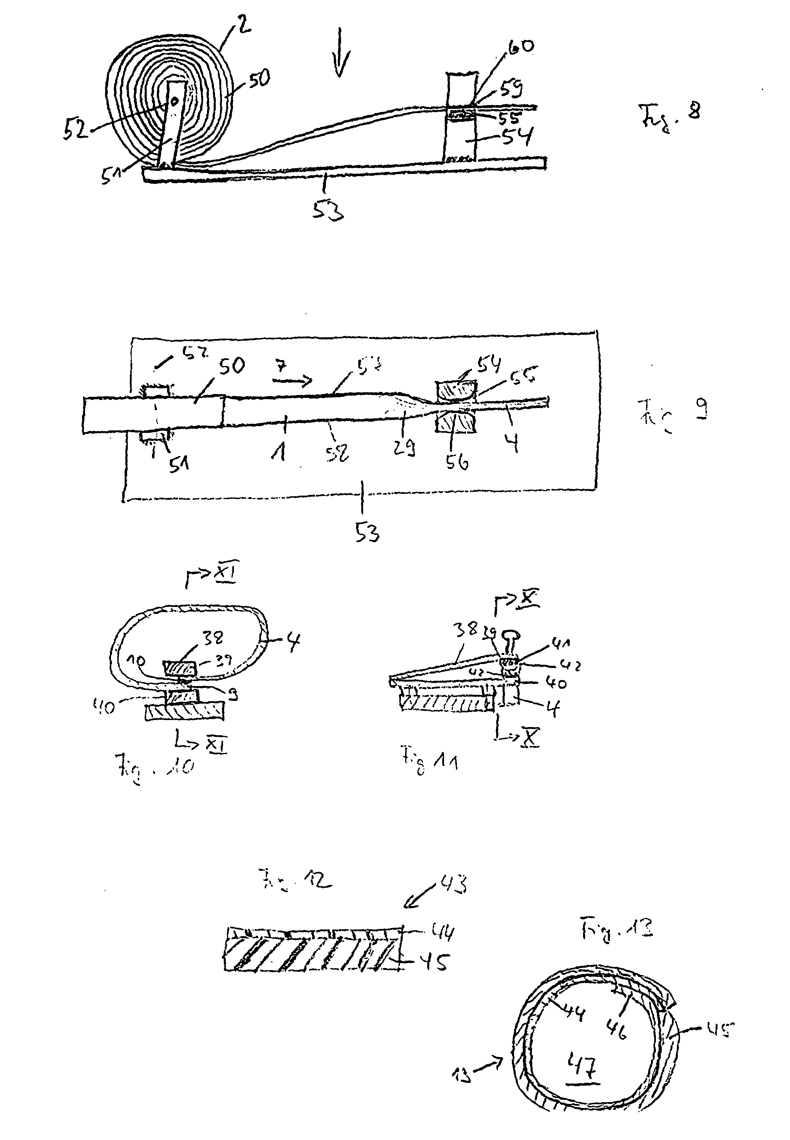

- Fig. 9:: eine schematische Darstellung gemäß Fig. 8 in Draufsicht;
- Fig. 10:: einen Querschnitt gemäß der Schnittlinie X-X in Fig. 11 einer Vorrichtung zum Verbinden von zwei Enden einer Folienbahn;
- Fig. 11:: einen Längsschnitt entlang der Schnittlinie XI-XI in Fig. 10 durch eine Vorrichtung zum Verbinden der Enden einer Folie;
- Fig. 12:: einen Querschnitt durch eine Zweischichtenfolie und
- Fig. 13:: einen Querschnitt durch eine aus einer Zweischichtenfolie gebildete Schlinge.

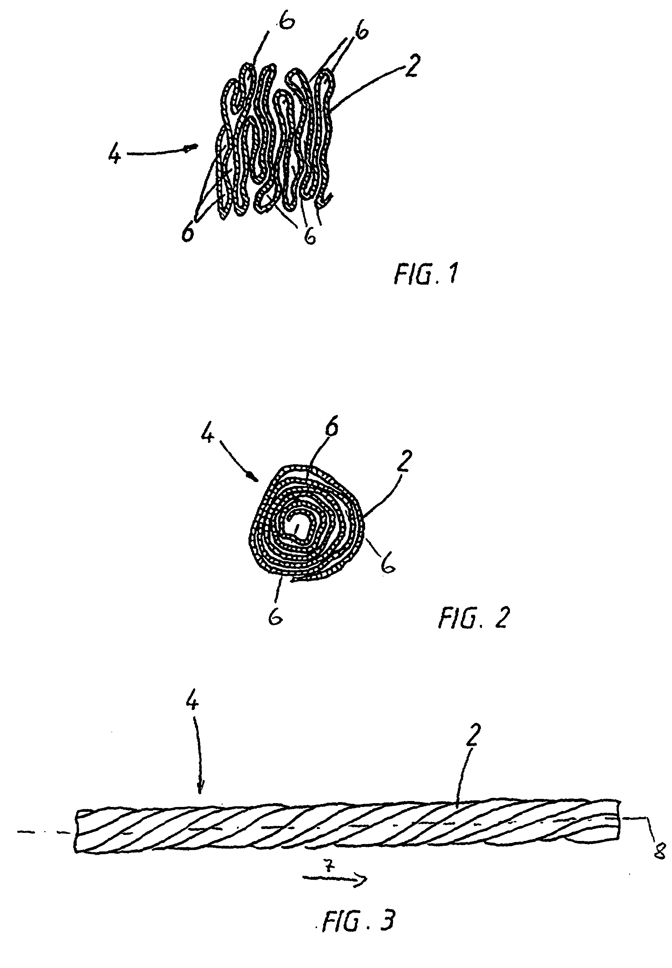

Die in der Zeichnung nur teilweise dargestellten Bänder bestehen jeweils aus einem langgestreckten Streifen 1 aus einer unter Zugspannung begrenzt elastisch dehnbaren Kunststoffolie 2 mit einer im wesentlichen gleichbleibenden Breite von 0,1 bis 0,5 m und einer Stärke von weniger als 0,05 mm, welcher vor dem Herumlegen um Ware 3 und/oder eine Transporteinheit 5 quer zu seiner Längsrichtung 7 zusammengerafft (Fig. 1) oder zusammengerollt (Fig. 2) und ggf. zusätzlich um seine Längsachse verdreht oder verdrillt worden ist (Fig. 3), um aus dem breiten, in flächenhafter Form und in langgestrecktem Zustand nicht oder nur schlecht handhabbaren Streifen 1 einen schnur- oder bandartigen Straps 4 zu erzeugen, der quer zur Längsrichtung leicht von Hand ergriffen werden kann, um ihn festzuhalten, um die Waren 3 und/oder Transporteinheit 5 herumzulegen oder überzustreifen und ggf. seine Enden 9, 10 unter Dehnung des erzeugten Strapses 4 mit einem Knoten 11 zu verbinden.

Der beim Zusammenraffen, Zusammenrollen und/oder Verdrehen bzw. Verdrillen des Streifens 1 entstehende ungedehnte Straps 4 weist im Querschnitt ein verhältnismäßig großes Volumen an Hohlräumen 6 auf, so daß sein spezifische Gewicht unter 0,5 g/cm liegt, was seine Handhabung ebenfalls erleichtert, da es nach dem Anlegen an die Waren 3 und/oder Transporteinheit 5 durch sein Eigengewicht nicht oder nur geringfügig nach unten gezogen wird. Die jeweils von Teilbereichen des Streifens 1 begrenzten Hohlräume 6 sind sowohl in Längsrichtung als auch quer dazu nach außen offen, so daß die darin enthaltene Luft leicht entweicht, was dazu führt, daß sich der Bandquerschnitt beim Ergreifen und insbesondere beim elastischen Dehnen des Strapses 4 sowie beim Herstellen eines Knotens 11 erheblich verringert. Dadurch läßt sich ein Knoten 11 fest zuziehen und verhindern, daß er sich ungewollt selbsttätig löst.

Der Straps 4 wird beim Herumlegen oder beim Überstreifen über die Waren 3 und/oder die Transporteinheit 5 gedehnt und dabei elastisch verformt, wobei die elastische Verformung ein gewisses Maß an unelastischer Verformung beinhaltet. Der Anteil an elastischer Verformung muß dabei durch geeignete Materialwahl stets so groß gehalten werden, daß er größer ist als die Längendifferenz zwischen der zum Überstreifen oder zum Verknoten erforderlichen Länge des Strapses 4 und den Umfangsabmessungen der Waren 3 und/oder der Transporteinheit 5 an der Stelle, an welcher der Straps 4 nach dem Loslassen gegen die Waren 3 und/ oder die Tranporteinheit 5 anliegt. Dies bewirkt, daß der gedehnte Straps 4 nach dem Loslassen die Waren 3 und/oder die Transporteinheit 5 straff umspannt und damit sicher zusammenhält.

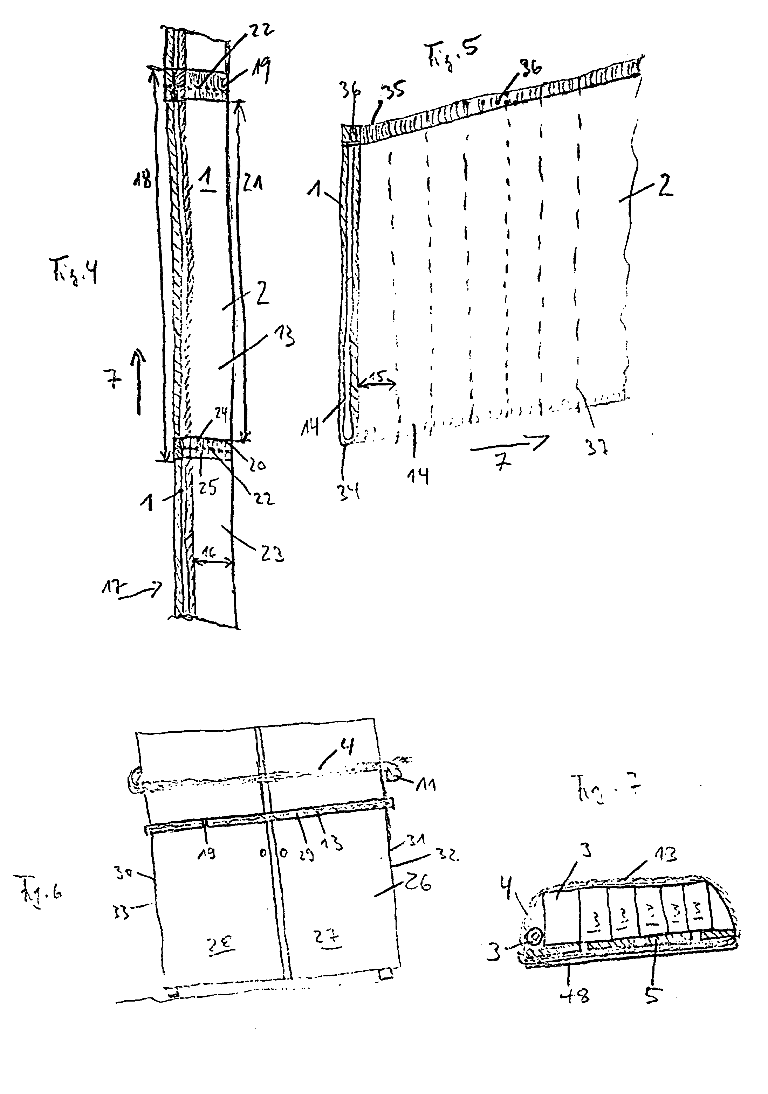

Als besonders zweckmäßig hat sich erwiesen, aus dem Streifen 1 ringförmige Schlingen 13 bzw. Schlaufen 14 herzustellen. Dabei besteht der Unterschied zwischen Schlingen 13 und Schlaufen 14 lediglich darin, daß die Schlaufe 14 eine größere Breite 15 als eine Schlinge aufweist. Zweckmäßigerweise werden die Schlingen 13 und die Schlaufen 14 aus einem Streifen 1 unverformter Kunststoffolie 2 hergestellt. Diese kann gemäß Fig. 4 in einer Breite 16 in Form einer Doppelfolie 17 so aufeinandergelegt werden, daß jede einzelne der beiden Kunststoffolien 2 deckungsgleich mit der jeweils anderen aufeinanderliegt. Sodann wird die Doppelfolie 17 in Abständen 18 an Verbindungsstellen 19, 20 so miteinander verbunden, daß die beiden Kunststoffolien 2 im Bereich der Verbindungsstellen 19, 20 fest miteinander verbunden sind, während sie in einem Zwischenraum 21, der zwischen zwei einander benachbarten Verbindungsstellen 19, 20 liegt, nicht miteinander verbunden sind. Quer zur Längsrichtung 7 der Kunststoffolie 2 erstreckt sich etwa durch die Mitte jeweils einer Verbindungsstelle 19, 20 eine Trennstelle 22, entlang der einander benachbarte Schlingen 13, 23 voneinander getrennt werden können, beispielsweise durch Aufbringen von Zugkraft auf die beiden Schlingen 13, 23. Die jeweils beidseits der Trennstelle 22 liegenden Bereiche 24, 25 jeder Verbindungsstelle 19, 20 reichen aus, um eine haltbare Verbindung zwischen den beiden die Schlinge 23 bildenden Streifen 1 der Kunststoffolie 2 herzustellen.

Nachdem eine Schlinge 23 von ihrer Nachbarschlinge 13 entlang der Trennstelle 22 getrennt worden ist, kann diese nunmehr in Längsrichtung zum Beispiel durch Raffen verformt werden und anschließend unter Vornahme entsprechender Vordehnung um eine Ware, beispielsweise einen Schrank 26 gelegt werden. Auf diese Weise ist dieser dagegen gesichert, daß während des Transportes sich seine Türen 27, 28 ungewollt öffnen und dadurch beschädigt werden. Die Schlinge 13 liegt mit ihren Verformungen 29 sowohl auf den Türen 27, 28 als auch an Seitenflächen 30, 31 und schließlich auf einer nicht dargestellten Hinterfläche des Schrankes 26 elastisch an, so daß die Türen 27, 28 in einem geschlossenen Zustand des Schrankes 26 gehalten werden können. Die Verformungen erhöhen die Festigkeit der Schlinge 13, so daß diese davor bewahrt wird, entlang möglicherweise scharf ausgebildeter Kanten 32, 33 zerschlissen zu werden, wenn diese beispielsweise während des Transportes von benachbarten zu transportierenden Teilen beaufschlagt werden. Darüber hinaus kann die mit Hilfe der Verformungen 29 in ihrer Breite 15 verkleinerte Schlinge 13 auch auf einfache Weise über den vom Schrank 26 gebildeten Querschnitt gestreift werden.

Darüber hinaus ist es auch möglich, eine Kunststoffolie 2 entlang einer Faltkante 34 so zu falten, daß ihre Längskanten 35 anschließend aufeinanderliegen. Die beiden aufeinanderliegenden Längskanten 35 werden miteinander verbunden, beispielsweise mit Hilfe einer Klebenaht 36. Zu diesem Zwecke wird auf mindestens eine der beiden Längskanten 35 ein Kleber aufgebracht, mit dem die andere Längskante verklebt wird. Auf diese Weise ist die Herstellung lediglich einer Klebenaht 36 notwendig, um Schlaufen 14 oder Schlingen 13 herzustellen. Diese können von der Kunststoffolie 2 mit Hilfe von Trennähten 37 getrennt werden, die sich quer zur Längsrichtung 7 der Kunststoffolie 2 durch diese erstrecken. Diese Trennähte 37 können beispielsweise aus einer Perforation bestehen. Entlang dieser Trennähte 37 können von der Kunststoffolie 2 die Schlaufen 14 in der jeweils benötigten Menge abgetrennt werden.

Statt einer Klebenaht 36, die übrigens auch im Falle der Verbindung einer Doppelfolie Verwendung finden kann, können die einzelnen Folienbahnen auch mit Hilfe einer Schweißverbindung verbunden werden. Zu diesem Zwecke werden Kunststoffolien 2 verwendet, die entweder in ihrer Gesamtheit aus einem Thermoplast bestehen. Dieses wird entlang der Verbindungsstelle 19, 20 bzw. der zu verbindenden Längskanten 35 mit Hilfe einer Heizpresse 38 so hoch erhitzt, daß die Thermoplaste anfangen weich zu werden, so daß sie sich unter der Einwirkung des von der Heizpresse erzeugten Druckes miteinander verbinden. In ähnlicher Weise können auch die Enden 9, 10 eines Strapses 4 miteinander verbunden werden. Zu diesem Zwecke werden die Enden 9, 10 zwischen zwei sich einander gegenüberliegenden Preßarmen 39, 40 plaziert, über die einerseits Druck und andererseits Wärme auf die Enden 9, 10 übertragen werden kann. Zur Erwärmung besitzen die Preßarme 39, 40 im Bereich ihrer Preßflächen 41 eine Heizung 42, beispielsweise eine elektrische Widerstandsheizung, die genügend Wärme erzeugt, um unter der Wirkung des aufgewendeten Druckes ein Verschweißen der Enden 9, 10 herbeizuführen. Eine solche Heizpresse 38 kann auch verwendet werden, um eine Klebenaht 36 schnell und sicher herzustellen.

Es ist jedoch auch möglich, die Kunststoffolie 2 als eine Mehrschichtenfolie 43 auszubilden, von der mindestens eine Oberschicht 44 als Thermoplast ausgebildet ist. Diese ist fest mit einer Trägerschicht 45 verbunden. Zum Zwecke der Ausbildung einer Schlinge 13 wird die Trägerschicht 45 von der Oberschicht 44 im Bereich einer Überlappung 46 gelöst, so daß in diesem Bereich die Oberschichten 44 aufeinanderliegen. Sie können im Wege des Verschweißens miteinander verbunden werden, so daß die Trägerschicht 45 die gesamte Schlinge 13 entweder innerhalb eines von der Schlinge 13 gebildeten Ringes 47 oder an dessen Außenfläche bedeckt.

Die Schlinge 13 bzw. Schlaufe 14 wird beispielsweise (Figur 7) um eine auf einer Trägereinheit 5 angeordnete Ware 3 geschlungen. Diese Trägereinheit 5 kann aus einer Palette bestehen, zwischen deren Längshölzern 48 der als Schlinge 13 oder Schlaufe 14 ausgebildete Straps 4 verlaufen kann. Dieser wird soweit vorgedehnt, daß er die als Palette ausgebildete Trägereinheit 5 und die auf dieser gestapelte Ware 3 straff umspannt und auf diese Weise dafür sorgt, daß die Ware 3 fest auf der Trägereinheit 5 steht, ohne bei Bewegungen der Trägereinheit 5 von dieser herabfallen zu können.

Als zweckmäßig hat sich eine Vorrichtung 49 herausgestellt, die einerseits dazu dient, den Streifen 1 einer Kunststoffolie 2 mit den notwendigen Verformungen 29 in Form von Raffungen, Verdrehungen oder Verdrillungen zu versehen und andererseits auch die Möglichkeit bietet, auf einfache Weise eine vorgewählte Dehnung auf den Streifen 1 aufzubringen. Zu diesem Zwecke wird der auf einer Rolle 50 aufgewickelte Streifen 1 in einer Abrollvorrichtung 51 um eine Achse 52 drehbar gelagert. Die Abrollvorrichtung 51 ist fest mit einem Boden 53 verbunden, auf dem auch in einiger Entfernung von der Abrollvorrichtung 51 eine Verformungsvorrichtung 54 befestigt ist. In dieser Verformungsvorrichtung 54 befindet sich eine Öffnung 55, die sich durch die Verformungsvorrichtung 54 erstreckt und dabei in etwa in Richtung des von der Rolle 2 abgewickelten Streifens 1 verläuft. Diese Öffnung 55 hat eine vorgegebenen Querschnitt, der demjenigen des Straps 4 entspricht. Dieser entsteht, wenn der Streifens 1 durch die Öffnung 55 hindurchgezogen wird. Dabei entstehen die Verformungen 29 im Streifen 1, die für den Straps 4 gewünscht sind.

Darüber hinaus kann in der Öffnung 55 eine Hemmung 56 angeordnet sein, die den Querschnitt der Öffnung 5 auf ein Maß verringert, das ein Hindurchziehen des Streifens durch die Öffnung 55 erschwert. Diese Hemmung 56 ist so bemessen, daß der Straps 4 in einer jeweils gewünschten Weise vorgedehnt ist, wenn er die Öffnung 55 verläßt. Dabei kann die Hemmung 56 so ausgebildet sein, daß sie den Querschnitt des Straps 4 in gewünschter Weise vorgibt. Es ist auch denkbar, die Hemmung 56 innerhalb der Öffnung 55 verstellbar so anzuordnen, daß der Straps 4 eine jeweils gewünschte Gestaltung annimmt.

Darüber hinaus kann die Hemmung 56 auch in der Weise beschaffen sein, daß sie den Streifen 1 in eine Vielzahl von einander parallel verlaufenden Faltungen aufteilt, die nach dem Verlassen der Öfffnung 55 gegeneinander verdrillt werden. Außerdem ist es möglich, die Hemmung 56 so auszubilden, daß der Streifen 1 in seiner Mitte an der Hemmung 56 geführt wird, während seine beiden Seitenkanten 57, 58 gegeneinander verdrillt werden.

Schließlich kann in der Öffnung 55 an ihrem der Rolle 50 abgewandten Ausgang 59 eine Schneide 60 vorgesehen sein, die entweder nur in einen Teil der Öffnung 55 hineinragt oder diese in ihrer Gesamtheit umgibt. Diese Schneide 60 ist dem entstehenden Straps 4 unmittelbar benachbart, so daß dieser durch eine Bewegung in Richtung auf die Schneide 60 von dem Streifen 1 abgetrennt werden kann.

Zur Sicherung eines Gegenstandes, beispielsweise eines Schrankes 26 bzw. einer mit Ware 3 beladenen Transporteinheit 5 wird ein Stück von einem Streifen 1 einer Kunststoffolie 2 abgetrennt und mit Verformungen 29 versehen. Diese Verformungen 29 können dadurch entstehen, daß der von dem Streifen 1 abgetrennte Straps 4 an seinen beiden Enden ergriffen und kräftig gedehnt wird. Dadurch entstehen die Verformungen 29 beispielsweise in Form von Raffungen oder Verdrehungen bzw. Verdrillungen. Gleichzeitig wird die Kunststoffolie 2 im elastischen Bereich vorgedehnt, ohne daß dieser elastische Bereich überschritten wird. Der auf diese Weise entstandene, vorgedehnte und mit Verformungen 29 versehene Straps 4 wird um den Schrank 26 bzw. die Transporteinheit 5 und die auf dieser gestapelten Ware 3 herumgebunden und durch einen Knoten 11 miteinander verbunden. Der Straps 4 schmiegt sich elastisch an sämtliche Flächen des Schrankes 26 bzw. an die Transporteinheit 5 und die auf ihr gelagerte Ware 3 an. Sowohl die Transporteinheit 5 mit ihrer Ware 3 als auch der Schrank 26 sind für den bevorstehenden Transport gesichert.

Wenn vorgefertige Schlingen 13 oder Schlaufen 14 zur Sicherung der Ware 3 oder einer Transporteinheit 5 verwendet werden, stehen diese in vielen Fällen bereits im gerafften, gerollten und/oder verbundenen Zustand zur Verfügung. Es ist jedoch auch denkbar, einen Streifen 13 entlang einer Trennstelle 22 von einem Streifen 2 einer miteinander verbundenen Doppelfolie 17 abzutrennen. Die Schlinge 13 wird sodann mit Verformungen, beispielsweise einer Raffung, Verdrehung oder Verdrillung versehen. Zu diesem Zwecke kann sie durch eine Öffnung 55 einer Vorrichtung 49 gezogen werden. Die auf diese Weise vorgedehnte Schlinge 13 wird sodann um die Ware 3, beispielsweise einen Schrank 26 oder eine Transporteinheit 5 gelegt.

In ähnlicher Weise wird mit einer Schlaufe 14 verfahren. Diese kann entlang einer Trennaht 37 von einer Kunststoffolie 2 abgetrennt werden, die entlang ihrer Längskante 35 durch eine Klebenaht 36 oder eine Schweißnaht verbunden ist. Die auf diese Weise erhaltene Schlaufe 14 wird verformt und vorgedehnt und kann sodann über die Ware 3 bzw. eine Transporteinheit 5 gezogen werden, ohne daß dadurch eine Dehnung stattfindet, die eine elastische Rückstellung ausschließt.

## Patentansprüche

1. Band zum Sichern von gepackten Waren (3), das als eine aus einer elastisch verformbaren Kunststofffolie (2) bestehende ringförmige Schlinge (13) oder Schlaufe (14) ausgebildet ist, die im elastisch verformten Zustand der Kunststofffolie (2) um die Waren (3) herumlegbar ist und die Waren (3) bei nachlassender Zugspannung unverrutschbar beaufschlagt, **dadurch gekennzeichnet, daß** die ungedehnte Kunststofffolie (2) eine Stärke zwischen 0,01 und 0,1 mm, vorzugsweise zwischen 0,01 und 0,05 mm aufweist und Elastizität in einem Bereich bis zu 600 % ihrer ungedehnten Ausgangslänge behält.

2. Band nach Anspruch 1, **dadurch gekennzeichnet, daß** die Folie zu einem schnur- oder bandartigen elastisch dehnbaren Straps (4) geformt ist, oder Verformungen (29) aufweist, die im wesentlichen in Längsrichtung (7) der Folie verlaufen.

3. Band nach Anspruch 2, **dadurch gekennzeichnet, daß** sich der gedehnte, um den Gegenstand und/oder die Transporteinheit (5) herumgelegte Straps (4) durch eine in Folge seiner elastischen Dehnung bewirkte Rückstellkraft straff um den Gegenstand und/oder die Transporteinheit (5) herumspannt.

4. Band nach einem der Ansprüche 2 bis 3, **dadurch gekennzeichnet, daß** die Folie quer zur Längsrichtung des Straps (4) gerafft ist.

5. Band nach einem der Ansprüche 1 bis 4, **dadurch gekennzeichnet, daß** die Teilbereiche der Folie gegeneinander zu einem Straps (4) verdrillt sind.

6. Band nach einem der Ansprüche 2 bis 5, **dadurch gekennzeichnet, daß** der Straps (4) als eine sich in Längsrichtung erstreckende Rolle ausgebildet ist, die einen spiralförmigen Querschnitt aufweist.

7. Band nach einem der Ansprüche 1 bis 6, **dadurch gekennzeichnet, daß** die Verformungen (29) regelmäßig ausgebildet sind.

8. Band nach einem der Ansprüche 1 bis 6, **dadurch gekennzeichnet, daß** die Verformungen (29) unregelmäßig ausgebildet sind.

9. Band nach einem der Ansprüche 2 bis 8, **dadurch gekennzeichnet, daß** der Straps (4) zwei ihn begrenzenden Seitenkanten (57,58) aufweist, die spiralförmig um eine Längsachse (8) des Strapses (4) verlaufen.

10. Band nach einem der Ansprüche 2 bis 9, **dadurch gekennzeichnet, daß** der ungedehnte verformte Straps (4) ein großes Volumen luftgefüllter Hohlräume (6) aufweist, so daß sein spezifisches Gewicht kleiner als 0,5 g/cm³, vorzugsweise kleiner als 0,3 g/cm³ ist.

11. Band nach einem der Ansprüche 2 bis 10, **dadurch gekennzeichnet, daß** sich der Querschnitt des gerafften, gerollten und/oder verdrehten Strapses (4) beim Dehnen auf ein Bruchteil, vorzugsweise auf weniger als ein Viertel des Querschnitts des ungedehnten Strapses (4) verringert.

12. Band nach einem der Ansprüche 2 bis 11, **dadurch gekennzeichnet, daß** mindestens eine zum Anbringen des gerafften, gerollten und/oder verdrehten Strapses (4) erforderliche, über die Umfangsabmessungen des Gegenstandes und/oder der Verpackungseinheit (5) am vorgesehenen Anbringungsort hinausgehende Dehnung des Stranges (2) nach dem Anbringen durch dessen elastische Verformung kompensierbar ist.

13. Band nach einem der Ansprüche 1 bis 12, **dadurch gekennzeichnet, daß** die Vordehnung auf eine bereits verformte Kunststofffolie (2) aufgebracht ist.

14. Band nach einem der Ansprüche 1 bis 13, **dadurch gekennzeichnet, daß** eine Breite, Materialstärke und ein Material der Kunststofffolie (2) derart einander angepaßt sind, daß der geraffte, zusammengerollte und/oder verdrehte Streifen (1) von Hand dehnbar ist.

15. Band nach einem der Ansprüche 1 bis 14, **dadurch gekennzeichnet, daß** die Kunststofffolie (2) vor dem Raffen, Rollen und/oder Verdrehen eine Breite zwischen 50 mm und 800 mm, vorzugsweise zwischen 100 und 400 mm aufweist.

16. Band nach einem der Ansprüche 1 bis 15, **dadurch gekennzeichnet, daß** die ungedehnte Kunststofffolie (2) eine Stärke zwischen 0,01 und 0,1 mm, vorzugsweise 0,01 und 0,05 mm ausweist.

17. Band nach einem der Ansprüche 1 bis 16, **dadurch gekennzeichnet, daß** die Reißfestigkeit der Kunststofffolie (2) größer als 35 N/mm² ist und vorzugsweise im Bereich zwischen 25 und 40 N/mm² liegt.

18. Band nach einem der Ansprüche 1 bis 17, **dadurch gekennzeichnet, daß** der Streifen (1) vor dem Raffen, Rollen und/oder Verdrehen von einer Bhn einer Kunststofffolie (2) abtrennbar ist.

19. Band nach einem der Ansprüche 1 bis 18, **dadurch gekennzeichnet, daß** die Kunststofffolie (2) vorgegebene Trennstellen (22) bzw. Trennnähte (37) aufweist.

20. Band nach Anspruch 19, **dadurch gekennzeichnet, daß** die Kunststofffolie (2) im Bereich der Trennstellen (22) bzw. Trennnähte (37) perforiert ist.

21. Band nach einem der Ansprüche 1 bis 20, **dadurch gekennzeichnet, daß** die Schlinge (13) bzw. Schlaufe (14) aus mindestens einem Streifen(1) ausgebildet ist, dessen einander gegenüberliegende Enden (9,10) miteinander verbunden sind.

22. Band nach Anspruch 21, **dadurch gekennzeichnet, daß** die Schlinge (13) aus einer Doppelfolie (17) besteht und die aufeinanderliegenden Enden jeder einzelnen Kunststofffolie (2) durch Verbindungsstellen (19,20) miteinander verbunden sind.

23. Band nach Anspruch 22, **dadurch gekennzeichnet, daß** die Doppelfolie (17) im Bereich der Verbindungsstellen (19,20) miteinander verschweißt ist.

24. Band nach Anspruch 22, dadurch gekennzeichzeichnet, daß die Doppelfolie (17) im Bereich der Verbindungsstelle (19,20) miteinander verknüpft ist.

25. Band nach Anspruch 22, **dadurch gekennzeichnet, daß** die Doppelfolie (17) im Bereich der Verbindungsstellen (19,20) miteinander verklebt ist.

26. Band nach einem der Ansprüche 1 bis 25, **dadurch gekennzeichnet, daß** zwischen einander benachbarten Schlingen (13) einer Kunststofffolie (2) mindestens eine Verbindungsstelle (19,20) vorgesehen ist, in deren Verlauf eine Trennstelle (22) vorgesehen ist.

27. Band nach Anspruch 26, **dadurch gekennzeichnet, daß** die Verbindungsstellen (19,20) zweier benachbarter Schlingen (13) jeweils einer der benacbarten Schlingen (13,23) zugeordnete Bereiche (24,25) aufweist, durch die sich eine Trennstelle (22) erstreckt.

28. Band nach Anspruch 26 oder 27, **dadurch gekennzeichnet, daß** die Trennstelle (22) als eine Perforation ausgebildet ist.

29. Band nach einem der Ansprüche 1 bis 28, **dadurch gekennzeichnet, daß** die Schlaufe (14) aus einer Kunststofffolie (2) besteht, die quer zu ihrer Längsrichtung (7) einmal so gefaltet ist, daß ihre beiden einander abgewandten Längskanten (35) aufeinanderliegend miteinander verbindbar sind.

30. Band nach einem der Ansprüche 1 bis 29, **dadurch gekennzeichnet, daß** die Schlinge (13) oder Schlaufe (14) von einem gerafften, gerollten und/oder verdrehten Streifen (1) gebildet ist.

31. Vorrichtung zur Aufnahme und Abgabe eines aus Kunststofffolie (2) bestehenden Bandes, mit dem eine gepackte Ware umschlingbar ist und das durch eine Öffnung (55) hindurchziehbar ist, **dadurch gekennzeichnet, daß** in der Öffnung (55) eine Hemmung (56) angeordnet ist, die das Hindurchziehen des als ein aus ringförmigen Schlingen (13) oder Schlaufen (14) bestehenden Bandes der Kunststofffolie (2) erschwert, so daß die Schlinge (13) bzw. Schlaufe (14) bis zu 600 % ihrer ungedehnten Ausgangslänge vordehnbar ist und an einer Trennstelle (22) von einer Nachbarschlaufe (13) trennbar ist.

32. Vorrichtung nach Anspruch 31, **dadurch gekennzeichnet, daß** die Hemmung (56) auf die jeweils verwendete Kunststofffolie (2) und die gewünschte Dehnung einstellbar ist.

33. Vorrichtung nach Anspruch 31 und 32, **dadurch gekennzeichnet, daß** in der Öffnung (55) eine das Abtrennen eines gewünschten Straps (4) begünstigende Schneide (60) vorgesehen ist.

34. Vorrichtung nach Anspruch 33, **dadurch gekennzeichnet, daß** die Schneide (60) mit einer Zähnelung versehen ist, über die die Kunststofffolie (2) abreißbar ist.

35. Vorrichtung nach Anspruch 34, **dadurch gekennzeichnet, daß** die Schneide (60) ringförmig die gesamte Öffnung (55) umgibt.

36. Verfahren zum Sichern von gepackten Waren (3) mit einer aus einer Kunststofffolie (2) bestehenden ringförmigen Schlinge (13) oder Schlaufe (14), die vor einem Umschlingen der Waren (3) unter einer Zugspannung aufgeweitet wird, **dadurch gekennzeichnet, daß** die Schlinge (13) oder Schlaufe (14) im elastisch verformten Zustand der Kunststofffolie (2) um die Waren (3) herumgelegbar ist und die Waren (3) bei nachlassender Zugspannung unverrutschbar beaufschlagt wird, und die ungedehnte Kunststofffolie (2) mit einer Stärke zwischen 0,01 und 0,1 mm, vorzugsweise zwischen 0,01 und 0,05 mm ausgebildet wird und mit einer Elastizität in einem Bereich bis zu 600 % ihrer ungedehnten Ausgangslänge ausgebildet wird.

37. Verfahren nach Anspruch 36, **dadurch gekennzeichnet, daß** der geraffte, gerollte und/oder verdrehte Streifen (1) unmittelbar vor oder während des Herumlegens gedehnt wird.

38. Verfahren nach Anspruch 37, **dadurch gekennzeichnet, daß** der geraffte, gerollte und/oder verdrehte Streifen (1) elastisch gedehnt wird.

39. Verfahren nach einem der Ansprüche 36 bis 38, dadurch gekenn zeichnet, daß der zu einer Schlinge (13) oder Schlaufe (14) geformte gerafte, gerollte und /oder verdrehte Streifen (1) über die Waren (3) und oder die Transporteinheit gestreift wird.

40. Verfahren nach einem, der Amsrpüche 36 bis 39, dadurch gekenn zeichnet, daß der Streifen (1) zu einer Schlinge (13) oder Schlaufe (14) geformt wird, anschließend verformt und sodann über die Ware (3) gestreift wird.

41. Verfahren nach Anspruch 36 oder 40, **dadurch gekennzeichnet, daß** der Streifen (1) unmittelbar vor oder während des Überstreifens so weit gedehnt wird, daß er sich unter gleichzeitigem Ergreifen von Hand über die Waren (3) und/oder die Transporteinheit ziehen läßt.

42. Verfahren nache eine der Ansprüche 36 bis 41, dadurch gekenn zeichnet, daß nach dem Überstreifen ein überstehnder Teil der Schlinge (13) oder Schlaufe (14) abgebunden wird.

43. Verfahren nach einem der Ansprüche 36 bis 42, dadurch gekenn zeichnet, daß zwei entgegengesetzte Enden (9, 10) des gerafften, gerollten und/oder verdrehten Streifens (1) vor dem Herumlegen des Folienstreifens um die Waren (3) und/oder die Transporteinheit (5) unter Bildung einer Schlaufe (14) oder Schlinge (13) miteinander verbunden werden.

44. Verfahren nach Anspruch 43, **dadurch gekennzeichnet, daß** die Enden (9, 10) verknotet werden.

45. Verfahren nach einem der Ansprüche 36 bis 42, dadurch gekenn zeichnet, daß die Streifen (1) durch Verschweißen oder Verkleben zweier zu einer Doppelfolie (17) übereinanderliegenden Kunststoffolie (2) in vorbestimmten Zwischenräumen (21) zu Schlingen (13) oder Schlaufen (14) geformt werden.

46. Verfahren nach Anspruch 45, **dadurch gekennzeichnet, daß** die Schlingen (13) oder Schlaufen (14) nach dem jeweils auftretenden Bedarf voneinadner getrennt werden.

47. Verfahren nach einem der Ansprüche 36 bis 46, dadurch gekenn zeichnet, daß der um die Waren (83) und/oder die Transporteinheit (5) herumgelegte geraffte, gerollte und/oder verdrehte Streifen (1) zum Abnehmen durchgeschnitten wird.

## Claims

1. Tape for securing packed goods (3), which is in the form of a ring-shaped sling (13) or carrying handle (14) consisting of an elastically deformable plastic film (2), which, with the plastic film (2) in the elastically deformed state, can be placed around the goods (3), and impacts the goods (3) without slipping when the tensile force is released, **characterized in that** the unextended plastic film (2) has a thickness between 0.01 and 0.1 mm, preferably between 0.01 and 0.05 mm, and possesses elasticity in a range up to 600% of its unextended initial length.

2. Tape according to Claim 1, **characterized in that** the film is formed into a string-or tape-like, elastically extendable strap (4), or has deformations (29) that run essentially in the longitudinal direction (7) of the film.

3. Tape according to Claim 2, **characterized in that** the extended strap (4), placed around the object and/or the transport unit (5), encircles the object and/or the transport unit (5) tightly on account of a recovery force arising in consequence of its elastic extension.

4. Tape according to one of Claims 2 to 3, **characterized in that** the film is gathered transverse to the longitudinal direction of the strap (4).

5. Tape according to one of Claims 1 to 4, **characterized in that** the partial zones of the film are twisted against one another to form a strap (4).

6. Tape according to one of Claims 2 to 5, **characterized in that** the strap (4) is formed as a roll extending in the longitudinal direction, which has a spiral-shaped cross-section.

7. Tape according to one of Claims 1 to 6, **characterized in that** the deformations (29) are formed regularly.

8. Tape according to one of Claims 1 to 6, **characterized in that** the deformations (29) are formed irregularly.

9. Tape according to one of Claims 2 to 8, **characterized in that** the strap (4) has two lateral edges (57, 58) delimiting it, which follow a spiral path about the longitudinal axis (8) of the strap (4).

10. Tape according to one of Claims 2 to 9, **characterized in that** the unextended deformed strap (4) has a large volume of air-filled cavities (6), so that its density is less than 0.5 g/cm³, and preferably less than 0.3 g/cm³.

11. Tape according to one of Claims 2 to 10, **characterized in that** the cross-section of the gathered, tolled and/or twisted strap (4), on extension, is reduced to a fraction, preferably to less than a quarter of the cross-section of the unextended strap (4).

12. Tape according to one of Claims 2 to 11, **characterized in that** at least one extension of string (2) reaching over the peripheral dimensions of the object and/or packing unit (5) on the intended place of application, necessary for applying the gathered, rolled or twisted strap (4), can be compensated by its elastic deformation after it is applied.

13. Tape according to one of Claims 1 to 12, **characterized in that** pre-extension is applied to an already deformed plastic film (2).

14. Tape according to one of Claims 1 to 13, **characterized in that** a width, material thickness and a material of the plastic film (2) are matched to one another, so that the gathered, rolled-up and/or twisted strip (1) can be extended by hand.

15. Tape according to one of Claims 1 to 14, **characterized in that** the plastic film (2), prior to gathering, rolling and/or twisting, has a width between 50 mm and 800 mm, preferably between 100 and 400 mm.

16. Tape according to one of Claims 1 to 15, **characterized in that** the unextended plastic film (2) has a thickness between 0.01 and 0.1 mm, preferably 0.01 and 0.05 mm.

17. Tape according to one of Claims 1 to 16, **characterized in that** the tensile strength of the plastic film (2) is greater than 35 N/mm² and is preferably in the range between 35 and 40 N/mm².

18. Tape according to one of Claims 1 to 17, **characterized in that** the strip (1), prior to gathering, rolling and/or twisting, can be separated from continuous sheeting of plastic film (2).

19. Tape according to one of Claims 1 to 18, **characterized in that** the plastic film (2) has designated separation points (22) or separation seams (37).

20. Tape according to Claim 19, **characterized in that** the plastic film (2) is perforated in the region of the separation points (22) or separation seams (37).

21. Tape according to one of Claims 1 to 20, **characterized in that** the sling (13) or carrying handle (14) is formed from at least one strip (1), the opposite ends (9, 10) of which are joined together.

22. Tape according to Clam 21, **characterized in that** the sling (13) consists of a double film (17) and the overlapping ends of each individual plastic film (2) are joined together by connecting points (19,20).

23. Tape according to Claim 22, **characterized in that** the double film (17) is welded together in the region of the connecting points (19, 20).

24. Tape according to Claim 22, **characterized in that** the double film (17) is linked together in the region of the connecting points (19,20).

25. Tape according to Claim 22, **characterized in that** the double film (17) is glued together in the region of the connecting points (19, 20).

26. Tape according to one of Claims I to 25, **characterized in that**, between adjacent slings (13) of a plastic film (2), at least one connecting point (19,20) is provided, in whose course a separation point (22) is provided.

27. Tape according to Claim 26, **characterized in that** the connecting points (19,20) of two adjacent slings (13) have regions (24,25) assigned to each of the adjacent slings (13,23), through which a separation point (22) extends.

28. Tape according to Claim 26 or 27, **characterized in that** the separation point (22) is formed as a perforation.

29. Tape according to one of Claims 1 to 28, **characterized in that** the carrying handle (14) consists of a plastic film (2), which is folded once, transverse to its longitudinal direction (7), so that its two opposite longitudinal edges (35) can overlap and be joined together.

30. Tape according to one of Claims 1 to 29, **characterized in that** the sling (13) or carrying handle (14) is formed from a gathered, rolled and/or twisted strip (1).

31. A device for taking up and releasing a tape consisting of a plastic film (2), which can be looped round a packed article and can be pulled through an opening (55), **characterized in that** a catch (56) is arranged in the opening (55), making it difficult to pull through the tape of plastic film (2), consisting of ring-shaped slings (13) or carrying handles (14), so that the sling (13) or carrying handle (14) can be pre-extended up to 600% of its unextended initial length and can be separated from an adjacent carrying handle (13) at a separation point (22).

32. A device according to Claim 31, **characterized in that** the catch (56) can be adjusted to the particular plastic film (2) used and the desired extension.

33. A device according to Claims 31 and 32, **characterised in that** a cutter (60) that promotes the separation of a desired strap (4) is provided in the opening (55).

34. A device according to Claim 33, **characterized in that** the cutter (60) is provided with teeth, over which the plastic film (2) can be torn off.

35. A device according to Claim 34, **characterized in that** the cutter (60) surrounds the entire opening (55) as a ring.

36. A method of securing packed goods (3) with a ring-shaped sling (13) or carrying handle (14) consisting of a plastic film (2), which is expanded under a tensile force before being looped round the goods (3), **characterized in that** the sling (13) or carrying handle (14) can be placed around the goods (3) in the elastically deformed state of the plastic film (2) and the goods (3) are impacted without slipping when the tensile force is released, and the unextended plastic film (2) is formed with a thickness between 0.01 and 0.1 mm, preferably between 0.01 and 0.05 mm, and is formed with an elasticity in a range up to 600% of its unextended initial length.

37. A method according to Claim 36, **characterized in that** the gathered, rolled and/or twisted strip (1) is extended immediately before or during wrapping round.

38. A method according to Claim 37, **characterized in that** the gathered, rolled and/or twisted strip (1) is extended elastically.

39. A method according to one of Claims 36 to 38, **characterized in that** the gathered, rolled and/or twisted strip (1), formed into a sling (13) or carrying handle (14), is slipped over the goods (3) and/or the transport unit.

40. A method according to one of Claims 36 to 39, **characterized in that** the strip (1) is formed into a sling (13) or carrying handle (14), then deformed and next slipped over the goods (3).

41. A method according to Claim 36 or 40, **characterized in that** the strip (1) is extended, immediately before or while it is slipped over, to an extent such that, by simultaneously gripping by hand, it can be pulled over the goods (3) and/or the transport unit.

42. A method according to one of Claims 36 to 41, **characterized in that** after slipping over, projecting part of the sling (13) or carrying handle (14) is detached.

43. A method according to one of Claims 36 to 42, **characterized in that** two opposite ends (9,10) of the gathered, rolled and/or twisted strip (1) are joined together to form a carrying handle (14) or sling (13) before the film strip is placed around the goods (3) and/or the transport unit (5).

44. A method according to Claim 43, **characterized in that** the ends (9, 10) are knotted.

45. A method according to one of Claims 36 to 42, **characterized in that** the strips (1) are formed into slings (13) or carrying handles (14) by welding or gluing two plastic films (2) lying on top of one another to produce a double film (17), in predetermined spaces (21).

46. A method according to Claim 45, **characterized in that** the slings (13) or carrying handles (14) are separated from one another as required.

47. A method according to one of Claims 36 to 46, **characterized in that** the gathered, rolled and/or twisted strip (1) placed around the goods (83) and/or the transport unit (5) is cut through for removal.

## Revendications

1. Bande de cerclage pour attacher ou maintenir des marchandises (3) emballées, agencée sous la forme d'un bracelet (13) ou d'une ceinture (14) constitué d'un film (2) de matière plastique déformable élastiquement, qui peut être placée autour des marchandises (3) à l'état déformé élastiquement du film (2) de matière plastique et maintient les marchandises de manière à ce qu'elles ne puissent pas glisser lorsque la tension est relâchée, **caractérisée en ce que** le film (2) de matière plastique, à l'état non étiré, présente une épaisseur comprise entre 0,01 et 0,1 mm, de préférence entre 0,01 et 0,05 mm et conserve son élasticité dans une plage allant jusqu'à 600 % de sa longueur d'origine à l'état non étiré.

2. Bande de cerclage selon la revendication 2, **caractérisée en ce que** le film est façonné en un lien (4) en forme de cordon ou de ruban, extensible élastiquement, ou présente des déformations (29) qui s'étendent essentiellement dans la direction longitudinale (7) du film.

3. Bande de cerclage selon la revendication 2, **caractérisée en ce que** le lien (4) étiré, placé autour de l'objet et/ou de l'unité de transport (5), du fait d'une force de rappel engendrée par son allongement élastique, se tend autour de l'objet et/ou de l'unité de transport (5).

4. Bande de cerclage selon une des revendications 2 à 3, **caractérisée en ce que** le film est plissé transversalement à la direction longitudinale du lien (4).

5. Bande de cerclage selon une des revendications 1 à 4, **caractérisée en ce que** des parties du film sont torsadées en opposition pour former un lien (4).

6. Bande de cerclage selon une des revendications 2 à 5, **caractérisée en ce que** le lien (4) est disposé en un rouleau s'étendant dans la direction longitudinale et présente une section en forme de spirale.

7. Bande de cerclage selon une des revendications 1 à 6, **caractérisée en ce que** les déformations (29) sont régulières.

8. Bande de cerclage selon une des revendications 1 à 6, **caractérisée en ce que** les déformations (29) sont irrégulières.

9. Bande de cerclage selon une des revendications 2 à 8, **caractérisée en ce que** le lien (4) présente deux bords latéraux (57, 58) qui délimitent ledit lien et s'étendent en hélice autour d'un axe longitudinal (8) du lien (4).

10. Bande de cerclage selon une des revendications 2 à 9, **caractérisée en ce que** le lien (4) mis en forme, à l'état non étiré, présente un volume important de cavités (6) remplies d'air, de sorte que son poids spécifique est inférieur à 0,5 g/cm³, de préférence inférieur à 0,3 g/cm³.

11. Bande de cerclage selon une des revendications 2 à 10, **caractérisée en ce que** la section transversale du lien (4) plissé, enroulé et/ou torsadé, lors de l'étirement, se réduit à une fraction, de préférence à un quart de la section du lien (4) non étiré.

12. Bande de cerclage selon une des revendications 2 à 11, **caractérisée en ce qu'**au moins un étirage du film (2) supérieur au périmètre extérieur de l'objet et/ou de l'unité d'emballage (5) à l'endroit prévu pour le lien, nécessaire pour la mise en place du lien (4) plissé, enroulé et/ou torsadé, peut être compensé par la déformation élastique dudit film.

13. Bande de cerclage selon une des revendications 1 à 12, **caractérisée en ce qu'**un pré-étirement est appliqué à un film de matière plastique terminé de mise en forme.

14. Bande de cerclage selon une des revendications 1 à 13, **caractérisée en ce que** la largeur, l'épaisseur de matériau et le matériau du film de matière plastique (2) sont mutuellement adaptés de telle sorte que la bande (1) plissée, enroulée et/ou torsadée, puisse être étirée à la main.

15. Bande de cerclage selon une des revendications 1 à 14, **caractérisée en ce que** le film de matière plastique (2), avant plissage, bobinage et/ou torsion, présente une largeur comprise entre 50 mm et 800 mm, de préférence entre 100 mm et 400 mm.

16. Bande de cerclage selon une des revendications 1 à 15, **caractérisée en ce que** le film de matière plastique (2) à l'état non étiré présente une épaisseur comprise entre 0,01 mm et 0,1 mm, de préférence entre 0,01 mm et 0,05 mm.

17. Bande de cerclage selon une des revendications 1 à 16, **caractérisée en ce que** la résistance à la déchirure du film de matière plastique (2) est supérieure à 35 N/mm2, et de préférence est située dans une plage allant de 25 à 40 N/mm².

18. Bande de cerclage selon une des revendications 1 à 17, **caractérisée en ce que** la bande (1), avant plissage, enroulage et/ou torsion, peut être découpée dans un ruban de film de matière plastique (2).

19. Bande de cerclage selon une des revendications 1 à 18, **caractérisée en ce que** le film de matière plastique (2) présente des points de séparation (22) ou des soudures de séparation (37).

20. Bande de cerclage selon la revendications 19, **caractérisée en ce que** le film de matière plastique (2) est perforé dans la région des points de séparation (22) ou des soudures de séparation (37).

21. Bande de cerclage selon une des revendications 1 à 20, **caractérisée en ce que** le bracelet (13) ou la ceinture (14) est formée d'au moins une bande (1), dont les extrémités en vis-à-vis sont liées l'une à l'autre.

22. Bande de cerclage selon la revendication 21, **caractérisée en ce que** le bracelet (13) est formé d'un film double (17) et que les extrémités superposées des différents films de matière plastique (2) sont liées par des points de liaison (19, 20).

23. Bande de cerclage selon la revendication 22, caxactétisée en ce que le film double (17) est soudé dans la région du point de liaison (19, 20).

24. Bande de cerclage selon la revendication 22, **caractérisée en ce que** le film double (17) est agrafé dans la région du point de liaison (19, 20).

25. Bande de cerclage selon la revendication 22, **caractérisée en ce que** le film double (17) est collé dans la région du point de liaison (19, 20).

26. Bande de cerclage selon une des revendications 1 à 25, **caractérisée en ce qu'**il est prévu entre des bracelets (13) voisins d'un film de matière plastique (2), au moins un point de liaison (19, 20) dans lequel il est prévu un point de séparation (22).

27. Bande de cerclage selon la revendication (26), **caractérisée en ce que** les points de liaison (19, 20) de deux bracelets (13) voisins comportent des zones (24, 25) associées à l'un des bracelets (13, 23), dans lesquelles sont aménagés les points de séparation (22).

28. Bande de cerclage selon la revendication 26 ou 27, **caractérisée en ce que** le point de séparation (22) est agencé sous forme de perforations.

29. Bande de cerclage selon une des revendications 1 à 28, **caractérisée en ce que** la ceinture (14) est formée d'un film de matière plastique (2) qui est plié une fois transversalement à sa direction longitudinale (7), de manière telle que ses deux bords longitudinaux (35) mutuellement éloignés appliqués l'un sur l'autre puisse être reliés.

30. Bande de cerclage selon une des revendications 1, à 29, **caractérisée en ce que** le bracelet (13) ou la ceinture (14) sont formés d'une bande (1) plissée, enroulée et/ou torsadée.

31. Dispositif pour recevoir et délivrer une bande de cerclage formée d'un film de matière plastique (2), à l'aide de laquelle une marchandise emballée peut être entourée et qui peut être tirée au travers d'une ouverture (55), **caractérisé en ce qu'**un moyen de retenue (56) est disposé dans l'ouverture (55), lequel moyen retarde l'extraction de la bande de matière plastique (2) conformée en bracelet (13) ou en ceinture (14), de telle sorte que ledit bracelet (13) ou ladite ceinture (14) puisse être pré-étiré jusqu'à 600 % de sa longueur d'origine, à l'état non étiré, et puisse être séparé de la ceinture (14) suivante au niveau d'un point de séparation (22).

32. Dispositif selon la revendication 31, **caractérisé en ce que** le moyen de retenue (56) peut être réglé en fonction du film de matière plastique (2) utilisé et de l'étirement souhaité.

33. Dispositif selon les revendications 31 et 32, **caractérisé en ce qu'**il est prévu dans l'ouverture (55) une arête (60) qui facilite la séparation d'un lien (4) souhaité.

34. Dispositif selon la revendication 33, **caractérisé en ce que** l'arête (60) est pourvue d'une dentelure sur laquelle le film de matière plastique (2) peut être coupé.

35. Dispositif selon la revendication 34, **caractérisé en ce que** l'arête (60) est disposée en anneau autour de toute l'ouverture (55).

36. Procédé pour attacher et maintenir des marchandises (3) emballées au moyen d'un bracelet (13) ou d'une ceinture (14) annulaire qui, préalablement au cerclage des marchandises, est élargi par une traction, **caractérisé en ce que** le bracelet (13) ou la ceinture (14) est disposé autour des marchandises (3) avec le film de matière plastique (2) à l'état déformé élastiquement, **en ce que** les marchandises (3) sont maintenues de manière à ce qu'elle ne puissent pas glisser lorsque la traction décroît, **en ce que** le film de matière plastique (2) présente une épaisseur comprise entre 0,01 et 0,1 mm, de préférence comprise entre 0,01 et 0,05 mm, et est doté d'une élasticité dans une plage allant jusqu'à 600 % de sa longueur d'origine, à l'état non étiré,

37. Procédé selon la revendication 36, **caractérisé en ce que** la bande (1) plissée, enroulée et/ou torsadée est étirée juste avant ou pendant sa mise en place.

38. Procédé selon la revendication 37, **caractérisé en ce que** la bande (1) plissée, enroulée et/ou torsadée est étirée élastiquement.

39. Procédé selon une des revendications 36 à 38, **caractérisé en ce que** la bande (1) plissée, enroulée et/ou torsadée façonnée en un bracelet (13) ou en une ceinture (14) est enfilée sur les marchandises (3) et/ou sur l'unité de transport.

40. Procédé selon une des revendications 36 à 39, **caractérisé en ce que** la bande (1) est façonnée en un bracelet (13) ou en une ceinture (14), puis est déformée et enfilée sur les marchandises (3).

41. Procédé selon une des revendications 36 à 40, **caractérisé en ce que** la bande (1) est étirée juste avant ou pendant sa mise en place, suffisamment pour qu'elle puisse être enfilée sur les marchandises (3) et/ou sur l'unité de transport par une intervention manuelle combinée.

42. Procédé selon une des revendications 36 à 41, **caractérisé en ce qu'**après mise en place on détache une partie en excédent du bracelet (13) ou de la ceinture (14).

43. Procédé selon une des revendications 36 à 42, cacactérisé en ce que deux extrémités (9, 10) en vis-à-vis de la bande (1) plissée, enroulée et/ou torsadée, avant mise en place de la bande de film autour des marchandises (3) et/ou sur l'unité de transport (5), sont liées l'une à l'autre pour former une ceinture (14) ou un bracelet (13).

44. Procédé selon la revendication 43, **caractérisé en ce que** les extrémités (9, 10) sont nouées.

45. Procédé selon une des revendications 36 à 42, **caractérisé en ce que** la bande (1) est façonnée par soudage ou par collage à intervalles (21) prédéterminés de deux films de matière plastique (2) placés l'un sur l'autre en un film double (17), aux fins de former des bracelets (13) ou des ceintures (14).

46. Procédé selon la revendication 45, **caractérisé en ce que** les bracelets (13) ou les ceintures (14) peuvent être séparés les uns des autres en fonction des besoins.

47. Procédé selon une des revendications 36 à 46, **caractérisé en ce que**, pour son élimination, la bande (1) plissée, enroulée et/ou torsadée placée autour des marchandises (3) et/ou de l'unité de transport (5) est coupée.
